# DEMANDE DE BREVET EUROPEEN

(11) **EP 1 316 532 A1**
(43) Date de publication de la demande: **04.06.2003**
(21) Numéro de dépôt: 02079907.8
(22) Date de dépôt: 26.11.2002
(51) Int. Cl.: C01G 23/053, C08K 3/22, C09C 1/36

(54) **Obtention à basse température de dépôts à effets photocatalytiques**

(30) Priorité: 30.11.2001 FR 0115508
(71) Demandeur: Koninklijke Philips Electronics N.V., 5621 BA Eindhoven (NL)
(72) Inventeur: Langlet, Michel, 75008 Paris (FR); Vautey, Christophe, 75008 Paris (FR); Kim, Alexei, 75008 Paris (FR)
(74) Mandataire: Chaffraix, Jean

(57) **Abrégé**

L'invention concerne un procédé d'obtention d'un substrat SUB muni sur au moins une partie de sa surface d'un revêtement à propriétés photocatalytiques à base de dioxyde de Titane. Le procédé inclut une étape de dépôt COAT par une technique de dépôt sol-gel d'une dispersion FSOL comprenant au moins un précurseur d'oxyde de Titane réagissant par voie sol-gel et un solvant organique, dit de dispersion. Cette étape est suivie d'une étape de cristallisation d'Anatase CRIS par traitement thermique sous pression. L'invention réside dans la réalisation du traitement thermique à une température inférieure ou égale à 140°C et sous une pression de vapeur saturante d'un mélange d'eau et d'un solvant organique dit solvant de pression.

Applications : Luminaires d'extérieur et d'intérieur, tout objet avantageusement pourvu d'une surface autonettoyante.

## Description

L'invention concerne un procédé d'obtention d'un substrat muni, sur au moins une partie de sa surface, d'un revêtement à propriétés photocatalytiques à base de dioxyde de Titane, ledit procédé incluant une étape de dépôt par une technique de dépôt sol-gel d'une dispersion comprenant au moins un précurseur d'oxyde de Titane réagissant par voie sol-gel et un solvant organique, dit de dispersion, suivie d'une étape de cristallisation d'Anatase par traitement thermique sous pression. L'étape de cristallisation d'Anatase est nécessaire à l'obtention de l'effet photocatalytique qui est activé par exposition à un rayonnement UV.

Un tel procédé est, par exemple, connu du document « Structural Changes in Sol-Gel Derived SiO2 and TiO2 Films by Exposure to Water Vapor », de H. Imai et Al., publié au Journal of Sol-Gel Science and Technology 10, 45-54 (1997). Le procédé décrit dans ce document permet l'obtention d'une forme cristallisée de l'oxyde de Titane : la phase Anatase. Cette cristallisation est obtenue à une température de 180°C par une étape d'application d'une pression d'eau dans un autoclave.

L'invention est liée aux considérations suivantes :

Dans l'art antérieur, des revêtements contenant des particules d'Anatase sont obtenus à 180°C. Cette température est trop élevée pour traiter de nombreux substrats sans en altérer les propriétés. Le polycarbonate (PC) et le polyméthylmétacrylate (PMMA) sont de tels substrats pour lesquels un procédé selon l'état de la technique ne peut être mis en oeuvre. Les auteurs du document de l'état de la technique remarquent aussi que les revêtements obtenus sont cassants et sont facilement décollés du substrat, ils ne peuvent donc pas être exploités dans des applications industrielles auxquelles sont destinés les dépôts réalisés sur des substrats comme le PC ou le PMMA. Ces applications industrielles concernent en particulier les revêtements sur des vasques destinées à des luminaires d'extérieur ou d'intérieur et sur tout objet avantageusement pourvu d'une surface autonettoyante. De plus, dans ce document, l'activité photocatalytique des revêtements obtenus par le procédé de l'état de la technique n'est pas caractérisée.

Un but de l'invention est de permettre d'obtenir un substrat muni d'un revêtement à propriétés photocatalytiques par un procédé fonctionnant à basse température.

En effet, un procédé d'obtention d'un substrat muni sur au moins une partie de sa surface d'un revêtement à propriétés photocatalytiques à base de dioxyde de Titane conforme au paragraphe introductif est remarquable selon l'invention en ce que le traitement thermique est réalisé à une température inférieure ou égale à 140°C et sous une pression de vapeur saturante d'un mélange d'eau et d'un solvant organique dit solvant de pression. L'invention permet ainsi d'obtenir à basse température des revêtements non dégradés et présentant des propriétés photocatalytiques.
Dans un mode de réalisation avantageux, le mélange d'eau et de solvant de pression est tel que la proportion molaire d'eau est incluse entre 10% et 100% et la pression partielle d'eau est comprise entre 0,5 et 3,5 bars. Dans un mode de réalisation préféré, la pression partielle d'eau est comprise entre 0,6 et 1,5 bars. Dans ces conditions, il est intéressant de souligner que la température est comprise entre 90 et 140°C. Cependant, la borne minimale de 10%
n'exclut pas que des proportions plus petites en eau soient utilisées selon l'invention. Une des originalités de l'invention vient de ce que la pression partielle d'eau qui induit la cristallisation mais peut aussi provoquer la dégradation des dépôts, est précisément contrôlée par la proportion molaire en eau dans le mélange liquide, indépendamment de la pression totale, laquelle est contrôlée par la proportion de solvant de pression. Ledit solvant de pression est avantageusement choisi parmi les alcools à chaînes carbonées comprenant entre 1 et 5 atomes de carbone. Ces solvants de pression doivent en outre ne pas dégrader le dépôt.
Le précurseur d'oxyde de Titane est avantageusement choisi parmi les organométalliques à base de Titane, particulièrement dans le groupe des alkoxydes. Il est dilué dans un solvant de dispersion et sa concentration dans le solvant de dispersion est avantageusement incluse entre 0,1 mol/l et 1 mol/l. D'autres précurseurs de Titane susceptibles de réagir par voie sol-gel peuvent être utilisés : par exemple, des sels minéraux tels que le chlorure de Titane.... Plus particulièrement, dans le mode de réalisation préféré, le précurseur de titane est du tétraisopropyl orthotitanate.
Dans une de ses applications, l'invention concerne donc également un substrat autonettoyant muni sur au moins une partie d'une de ses faces d'un revêtement à propriétés photocatalytiques à base de dioxyde de Titane au moins partiellement cristallisé et incorporé audit revêtement en partie sous forme de particules majoritairement cristallisées sous forme Anatase, caractérisé en ce que ledit substrat est obtenu par un procédé d'obtention conforme à l'invention. Ainsi, la présente invention peut être mise en oeuvre pour obtenir tout objet incluant un substrat avantageusement muni d'un revêtement à propriétés photocatalytiques.

L'invention sera mieux comprise à la lumière de la description suivante de quelques modes de réalisation, faite à titre d'exemple et en regard des dessins annexés, dans lesquels :
la figure 1 est un diagramme schématique d'un procédé selon l'invention,
la figure 2 est un tableau illustrant l'optimisation des paramètres pour l'obtention à basse température de dépôts cristallisés présentant un effet photocatalytique,
la figure 3 présente un cliché de diffraction électronique,
la figure 4 présente des images en fond clair et fond noir de microscopie électronique à transmission démontrant la cristallisation d'Anatase et la petite taille des particules cristallisées,
la figure 5 présente un spectre FTIR confirmant la cristallisation d'Anatase.

La description qui va suivre est présentée pour permettre à un homme du métier de réaliser et de faire usage de l'invention. Cette description est fournie dans le contexte de la demandé de brevet et de ses exigences. Des alternatives diverses au mode de réalisation préféré seront évidentes à l'homme du métier et les principes génériques de l'invention exposés ici peuvent être appliqués à d'autres mises en oeuvre. Ainsi, la présente invention n'est pas sensée être limitée au mode de réalisation décrit mais plutôt avoir la portée la plus large en accord avec les principes et les caractéristiques décrits ci-après.

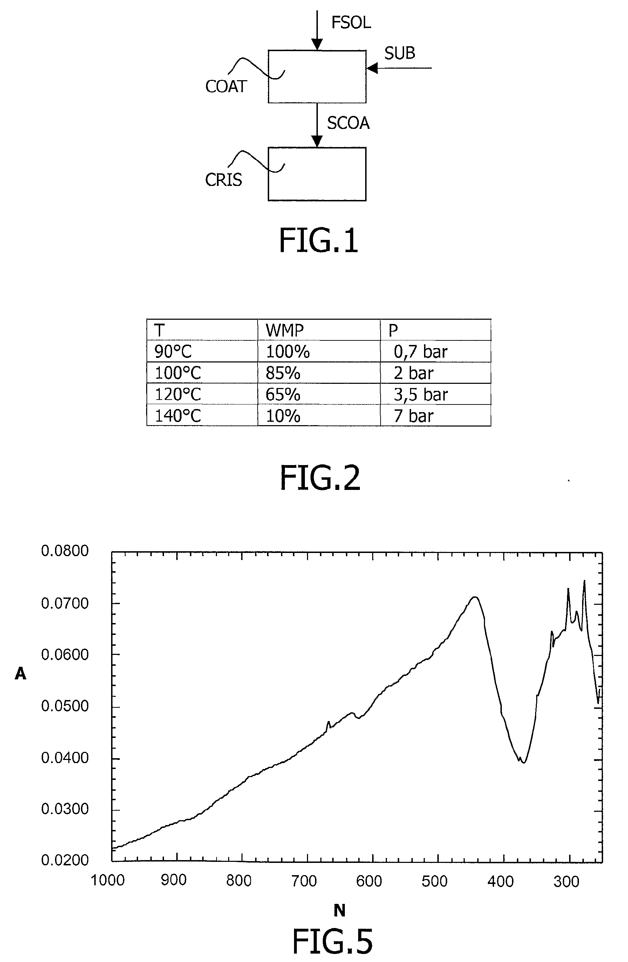

La figure 1 présente un diagramme schématique d'un procédé selon l'invention. La première étape du procédé selon l'invention consiste en une étape de dépôt COAT d'une dispersion FSOL, comprenant au moins un précurseur d'oxyde de Titane et un solvant organique, dit de dispersion, sur un substrat SUB. Le substrat peut être tout objet qui présente un avantage à posséder au moins une face présentant des propriétés autonettoyantes, le matériau le constituant pouvant être avantageusement un matériau sensible aux températures élevées. En effet, l'invention permet de réaliser des surfaces autonettoyantes à partir de dépôts incluant des cristaux d'Anatase sans requérir un traitement à une température supérieure à 140°C. L'invention a par exemple permis d'obtenir une cristallisation au sein d'un dépôt à une température de 90°C. Cette température entre dans les tolérances des substrats polymères. Ainsi le substrat SUB est dans un mode de réalisation préféré à base de polycarbonate ou de polyméthylméthacrylate. Cependant le substrat SUB peut être également choisi parmi d'autres substrats qui sont sensibles à la température ou parmi les substrats qui ne sont pas sensibles à la température de manière critique comme par exemple des tranches de Silicium ou des verres minéraux.
La dispersion FSOL peut être de compositions diverses. Dans le mode de réalisation préféré la solution est préparée à partir de TIPT (tétraisopropyl orthotitanate) dans un mélange d'éthanol absolu, d'eau dé ionisée et d'acide chlorhydrique. Des intervalles de concentration en TIPT divers peuvent être utilisés, choisis de préférence entre 0,1 et 1 mol/l. Dans le mode de réalisation préféré le pH de la solution est de 1,27, le rapport molaire d'eau sur TIPT est de 0,8 et la concentration en TIPT est de 0,4 mol/l. D'autres précurseurs de Titane susceptibles de réagir par voie sol-gel peuvent être utilisés : par exemple, des sels minéraux tels que le chlorure de Titane.... Les intervalles de concentration sont choisis pour permettre aux réactions sol-gel de se produire.
Dans le mode de réalisation préféré, le dépôt est réalisé sur échantillon tournant (spin-coating en anglais) où une quantité de solution dépendant de la surface à recouvrir est étalée sur le substrat à recouvrir ; ledit substrat étant maintenu en rotation à une vitesse donnée pour permettre l'étalement. Dans le mode de réalisation préféré, la quantité déposée est de 5 à 6 microlitres pour une surface de 10 cm2 et le substrat est mis en rotation à une vitesse de 2500 tours/min. D'autres conditions de dépôt par spin-coating peuvent être utilisées et des substrats de tailles différentes ou de formes complexes peuvent également être revêtus. D'autres techniques de dépôt peuvent aussi être mises en oeuvre. On citera à titre d'exemple des techniques de dépôt classiques en sol-gel. Par exemple, en anglais les techniques portent les noms de dip-coating, spray-coating, cell-coating suivant la caractéristique de la technique. Après le dépôt, les couches sèchent pendant un temps variable de 2 à 15 minutes en conditions ambiantes, séchage pendant lequel se déroulent les transformations sol-gel par les réactions connues d'hydrolyse/polycondensation caractéristiques de ces produits. Un dépôt SCOA est ainsi obtenu.
La deuxième étape du procédé consiste en une étape de cristallisation CRIS d'Anatase au sein du dépôt SCOA obtenu à l'étape précédente, par traitement thermique sous pression caractérisé en ce que le traitement thermique est réalisé à une température inférieure ou égale à 140°C et sous une pression de vapeur saturante d'un mélange d'eau et d'un solvant organique dit solvant de pression. Dans le mode de réalisation préféré, le traitement sous pression peut ainsi durer 1 à 20 heures. Dans l'ensemble, une durée de 5 heures paraît être un compromis avantageux entre une bonne cristallisation et une durée courte de traitement compatible avec des objectifs de production industrielle. C'est la durée utilisée dans le mode de réalisation préféré.
Dans le mode de réalisation préféré, l'étape de cristallisation est réalisée au sein d'un autoclave placé dans un four tubulaire. L'autoclave contient une petite quantité d'un mélange d'eau et du solvant de pression. Des rapports eau/solvant de pression variés ont été testés. Avantageusement, le mélange d'eau et de solvant de pression est tel que la proportion molaire d'eau est comprise entre 10 et 100%. Cependant, la borne minimale de 10% n'exclut pas que des proportions plus petites en eau soient utilisées selon l'invention. En parallèle, le solvant de pression est avantageusement choisi parmi les alcools à chaînes carbonées comprenant entre 1 et 5 atomes de carbone. Ces solvants de pression doivent en outre ne pas dégrader le dépôt.

Ainsi dans le mode de réalisation préféré, le solvant de pression est l'éthanol. La composition eau/éthanol et la quantité de liquide placé dans l'autoclave sont avantageusement choisies pour obtenir une pression partielle d'eau comprise entre 0,5 et 3,5 bars à la température de traitement choisie. Dans un mode de réalisation avantageux, la pression partielle d'eau est comprise entre 0,6 et 1,5 bars. Une des originalités de l'invention vient de ce que la pression partielle d'eau qui induit la cristallisation mais peut aussi provoquer la dégradation des dépôts, est précisément contrôlée par la proportion molaire en eau dans le mélange liquide, indépendamment de la pression totale, laquelle est contrôlée par la proportion de solvant de pression. Le substrat est placé sur un support conçu pour éviter les contacts directs du substrat avec le liquide. Durant le traitement thermique, la température est régulée en utilisant un thermocouple inséré dans la paroi de l'autoclave. La pression dans l'autoclave imposée par la température interne, par le volume de liquide et sa composition est contrôlée avec un manomètre. Le paramètre majeur pour induire la cristallisation à une température donnée est la pression partielle d'eau qui dépend de la composition du mélange eau-solvant de pression et de la température à laquelle on veut traiter le dépôt.

Pour les différents traitements évoqués ci-dessus, l'équilibre en température et pression est atteint après environ 30 minutes. Les traitements thermiques ont été réalisés à différentes températures de 90 à 140°C. Après un traitement de 1 à 20 heures, l'autoclave est ouvert rapidement de manière à évaporer le liquide et éviter la recondensation sur la surface du dépôt. L'échantillon est ensuite refroidi à température ambiante. En général, on note que le dépôt possède des propriétés optiques après le traitement thermique sensiblement identiques à celles qu'il présentait avant le traitement thermique. L'épaisseur des couches est alors d'environ 150 nm en utilisant les conditions du mode de réalisation préféré. Cette épaisseur peut être augmentée en changeant, par exemple, les conditions de dépôt et/ou la quantité de solution déposée, ou encore en utilisant une procédure de dépôt multicouche. Nous verrons ultérieurement le rôle de l'épaisseur dans les propriétés du dépôt.

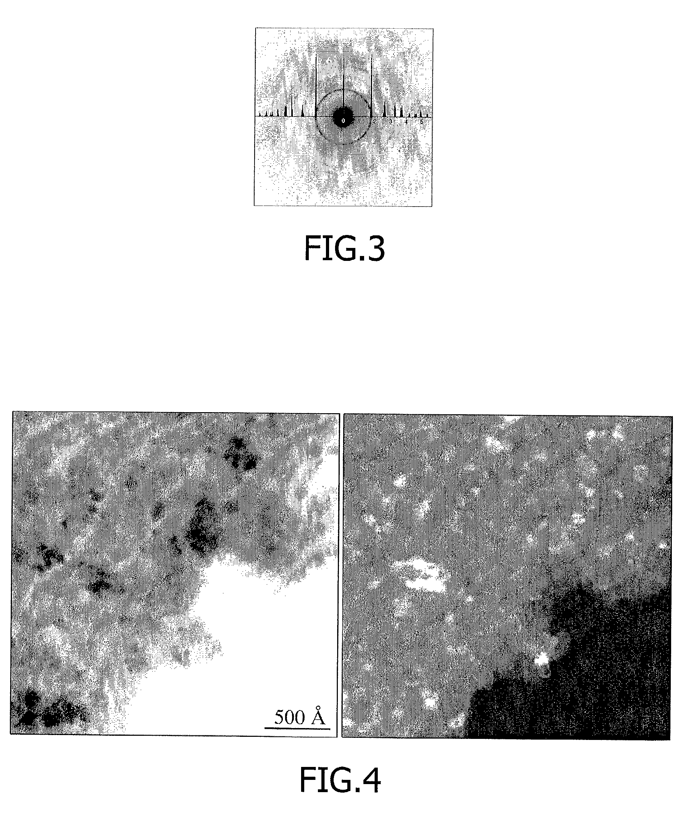

Les caractérisations physico-chimique et microstructurales des dépôts sont réalisées par TEM et spectroscopie FTIR à transmission. L'épaisseur des dépôts est mesurée par ellipsométrie ou par spectroscopie UV/visible. L'activité photocatalytique du dépôt est testée par décomposition d'une solution d'acide malique, le dépôt étant plongé dans une solution aqueuse d'acide malique et exposé à un rayonnement UV. La décomposition photocatalytique de l'acide malique est mesurée à des intervalles réguliers par prélèvements partiels étudiés par chromatographie. L'acide malique a été choisi comme un modèle de molécule d'acides carboxyliques qui sont les constituants principaux des produits intermédiaires des procédés de dégradation par oxydation que les dépôts photocatalytiques provoquent.
Selon l'invention, il est nécessaire d'imposer une pression de vapeur partielle d'eau comprise entre 0,5 et 3,5 bars dans l'autoclave. Dans un mode de réalisation avantageux, la pression partielle d'eau est comprise entre 0,6 et 1,5 bars. Cette pression peut être avantageusement contrôlée par le rapport molaire entre l'eau et l'éthanol ou tout autre solvant de pression, ainsi que par la température de traitement thermique. Une vapeur d'éthanol pur dilue les
couches et une pression de vapeur d'eau trop faible ne permet pas la cristallisation des dépôts qui ne présentent donc pas d'effet photocatalytique. A l'inverse, une trop forte pression de vapeur d'eau conduit à des couches cristallisées mais dégradées. Des cristallisations optimales sans dégradation des dépôts ont ainsi été obtenues pour des proportions molaires en eau incluses entre10 et 100% selon que la température est ajustée entre 140 et 90°C.
L'invention remarque en effet que le dépôt n'est pas dégradé à 90°C même lorsque la proportion est de 100% en eau. En revanche à 140°C et au-delà (comme dans le document de l'art antérieur où les expériences sont réalisées à 180°C), une proportion de 100% en eau dégrade le dépôt. Cela est dû à la forte différence de pression d'eau entre les deux températures : environ 0,7 bars à 90°C et 3,5 bars à 140°C. La cristallisation sans dégradation du dépôt peut donc être obtenue à des températures plus basses si une vapeur plus riche en eau est utilisée. En effet, il existe une situation de compromis entre ces deux paramètres car la cristallisation est activée aussi bien par la température que par la pression d'eau. Par exemple, la modification de ces paramètres permet d'obtenir la cristallisation à 100°C avec une proportion molaire en eau dans le liquide vaporisé de 85%. Il est donc nécessaire d'adapter la pression de vapeur d'eau en fonction de la température de traitement pour obtenir une cristallisation optimale aux températures souhaitées. Connaissant la composition du liquide vaporisé, il est aisé, pour une température de travail souhaitée, de déterminer un intervalle de pression partielle d'eau pour lequel la cristallisation est optimale. Dans le cas de l'éthanol comme solvant de pression, pour une température comprise entre 90 et 140°C, cet intervalle est de 0,5 à 3,5 bars en fonction de la composition du mélange liquide eau/éthanol vaporisé dans l'autoclave et dans un mode de réalisation avantageux, il est de 0,6 à 1,5 bars. Le tableau de la figure 2 résume de manière rapide comment les deux tendances entre la température T exprimée en °C et la proportion molaire d'eau WMP dans le liquide vaporisé (ici eau/éthanol) exprimée en pourcentage molaire se compensent pour permettre de réaliser un dépôt à effet photocatalytique entre 90 et 140°C, la pression P globale exprimée en bars au sein de l'autoclave évoluant selon l'augmentation de température. Une cristallisation à de telles températures permet d'appliquer une couche autonettoyante à des substrats en polymères sensibles à la température sans dégradation du substrat ou de la couche. Le dépôt présente une très bonne qualité optique. En effet il ne provoque pas de diffusion dans le spectre visible du fait de l'absence de dégradation et de la taille nanométrique des cristallites. Le dépôt inclut en effet des nanocristallites d'Anatase d'environ 5 à 20 nm de diamètre selon les conditions expérimentales, identifiables en microscopie électronique à transmission sur la figure 3 qui montre un cliché de diffraction électronique et sur la figure 4 qui présente des images en fond clair et fond noir de microscopie électronique à transmission démontrant la cristallisation d'Anatase et la petite taille des particules cristallisées pour un dépôt cristallisé à 140°C (20 heures) en conditions azéotropiques du mélange eau-éthanol. La cristallisation est confirmée par des anneaux de diffraction électronique très fins qui montrent également l'absence de phase amorphe résiduelle. Pour confirmer ces propos, la figure 5 propose un spectre FTIR des dépôts. Cette figure représente une absorbance relative A en fonction du nombre d'onde N en cm⁻¹. Ce spectre d'un dépôt cristallisé à 140°C (5 heures) en conditions azéotropiques présente deux bandes fines et très bien résolues à 440 et 300cm⁻¹ caractéristique de la phase cristalline Anatase.
La cristallisation se réalise suivant les étapes suivantes : formation d'agrégats de cristallites mutuellement orientés puis désorientation au sein des agrégats et croissance des cristallites. La cristallisation est accompagnée d'une augmentation de la porosité de la couche. Les propriétés autonettoyantes du dépôt sont basées sur un effet photocatalytique induit par l'interaction de paires électron-trou avec la matière à décomposer présente à la surface des cristallites. Un bon degré de cristallisation qui garantit la formation de paires électron-trou sous l'effet d'un rayonnement UV, une petite taille de cristallites qui garantit la diffusion des paires électron-trou à la surface des grains sans recombinaison notable en volume et qui garantit une plus grande surface de contact avec la matière à décomposer, et une porosité contrôlée qui ne réduise pas les transferts interfaciaux mais qui permette la diffusion de la matière à décomposer au sein du dépôt, influencent positivement l'efficacité photocatalytique du dépôt. En effet dans ce cas, les réactions photocatalytiques se réalisent au sein même du dépôt et sont d'autant plus importantes que la surface spécifique des cristaux d'Anatase est grande. Il peut être ainsi avantageux d'augmenter l'épaisseur du dépôt de manière à augmenter l'importance des réactions photocatalytiques. L'épaisseur peut être avantageusement contrôlée en modifiant les conditions de dépôt ou en utilisant une procédure de dépôt multicouche. En effet, par le procédé selon l'invention, appliqué en alternance par cycles de dépôt/traitement en autoclave, il est intéressant de souligner que l'effet photocatalytique augmente avec l'épaisseur, la transmission optique restant proche de celle du substrat nu. Ainsi, l'épaisseur peut être contrôlée entre des épaisseurs inférieures à 0,1 micron (des épaisseurs de dépôt à effet photocatalytique de 50 nm sont possibles avec le mode de réalisation préféré selon l'invention) jusqu'à 1 micron et plus (par exemple par procédure multicouches exposée ci-avant). Des dépôts sol-gel d'oxyde de Titane sur tranches de silicium traités à 500°C ont été utilisés comme étalons de comparaison pour déterminer l'activité photocatalytique des dépôts. Les dépôts traités à cette température sont cristallisés dans la phase Anatase et ils sont connus pour présenter une activité photocatalytique forte et qui suffit dans la plupart des applications visées, en particulier pour les substrats en PMMA et PC qui sont destinés à des éclairages d'extérieur. Pour une épaisseur égale, l'activité photocatalytique obtenue sur des tranches de silicium selon l'invention est d'environ 50% de l'activité photocatalytique de l'étalon. L'activité photocatalytique obtenue pour la même quantité de solution déposée sur des substrats de polymères (PMMA et PC) est d'environ 30-40% de l'activité photocatalytique de l'étalon. La diminution entre les deux types de substrat est attribuée à leur différence de réflectance, les UV pouvant être réfléchis sur la surface de silicium, ce qui augmente leur interaction avec le dépôt photocatalytique, alors qu'ils sont absorbés et non réfléchis à la surface du polymère. La différence d'effet photocatalytique entre substrats de silicium et substrats de polymères n'est donc pas liée à une moins bonne activité photocatalytique des dépôts sur polymères. Pour avoir une comparaison plus objective entre les substrats selon l'invention et ceux traités à 500°C, il est préférable de ramener les valeurs à la quantité de matière déposée, c'est-à-dire comparer les activités spécifiques. Connaissant la quantité de liquide déposé et la porosité des dépôts une fois traités, on obtient une activité spécifique entre 85 et 100% de celle des dépôts traités à 500°C suivant la porosité qui varie en général de 40 à 60% pour les dépôts réalisés selon l'invention. Les activités spécifiques obtenues sont donc proches des activités étalons et l'utilisation des dépôts selon l'invention permet donc d'obtenir des substrats présentant des propriétés autonettoyantes lorsque le substrat est revêtu sur au moins une partie d'une face ou de plusieurs faces.
Bien que cette invention ait été décrite en accord avec les modes de réalisation présentés, un homme du métier reconnaîtra immédiatement qu'il existe des variantes aux modes de réalisation présentés et que ces variantes restent dans l'esprit et sous la portée de la présente invention. Ainsi, de nombreuses modifications peuvent être réalisées par un homme du métier sans pour autant s'exclure de l'esprit et de la portée définis par les revendications suivantes.

## Revendications

1. Procédé d'obtention d'un substrat muni, sur au moins une partie de sa surface, d'un revêtement à propriétés photocatalytiques à base de dioxyde de Titane, ledit procédé incluant une étape de dépôt par une technique de dépôt sol-gel d'une dispersion comprenant au moins un précurseur d'oxyde de Titane réagissant par voie sol-gel et un solvant organique, dit de dispersion, suivie d'une étape de cristallisation d'Anatase par traitement thermique sous pression, **caractérisé en ce que** le traitement thermique est réalisé à une température inférieure ou égale à 140°C et sous une pression de vapeur saturante d'un mélange d'eau et d'un solvant organique dit solvant de pression.

2. Procédé selon la revendication 1, **caractérisé en ce que** le mélange d'eau et de solvant de pression est tel que la proportion molaire d'eau est incluse entre 10 et 100% et la pression de vapeur d'eau est incluse entre 0,5 et 3,5 bars.

3. Procédé selon l'une des revendications 1 et 2, **caractérisé en ce que** ledit solvant de pression est choisi parmi les alcools à chaînes carbonées comprenant entre 1 et 5 atomes de carbone.

4. Procédé selon l'une des revendications 1 et 3, **caractérisé en ce que** le précurseur d'oxyde de Titane est choisi parmi les organométalliques à base de Titane.

5. Procédé selon l'une des revendications 1 à 4, **caractérisé en ce que** la concentration en précurseur dans le solvant de dispersion est incluse entre 0,1 mol/l et 1 mol/l.

6. Substrat autonettoyant muni sur au moins une partie d'une de ses faces d'un revêtement à propriétés photo-catalytiques à base de dioxyde de Titane au moins partiellement cristallisé et incorporé audit revêtement en partie sous forme de particules majoritairement cristallisées sous forme Anatase, **caractérisé en ce que** ledit substrat est obtenu par un procédé d'obtention conforme à l'une des revendications 1 à 5.

7. Substrat selon la revendication 6, **caractérisé en ce que** le revêtement photocatalytique est d'épaisseur comprise entre 50 nanomètres et une épaisseur de l'ordre du micron obtenu par un procédé monocouche selon l'une des revendications 1 à 5 éventuellement répété dans une procédure de dépôt multicouches.

8. Substrat selon l'une des revendications 6 et 7, **caractérisé en ce que** le revêtement présente des propriétés photocatalytiques augmentant avec son épaisseur et que le substrat muni du revêtement photocatalytique présente une transmission optique proche de celle du substrat nu.
